(19) Europäisches Patentamt
European Patent Office
Office européen des brevets

(11) **EP 2 189 647 B1**

(12) **EUROPEAN PATENT SPECIFICATION**

(45) Date of publication and mention
of the grant of the patent:
**25.04.2012 Bulletin 2012/17**

(51) Int Cl.:
**F02M 25/07** (2006.01)    **F02B 37/18** (2006.01)

(21) Application number: **09172871.7**

(22) Date of filing: **13.10.2009**

(54) **Boost pressure controller for internal combustion engine**

Ladedruckregler für Verbrennungsmotor

Contrôleur de pression d'admission pour moteur à combustion interne

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.11.2008 JP 2008300045**

(43) Date of publication of application:
**26.05.2010 Bulletin 2010/21**

(73) Proprietor: **Honda Motor Co., Ltd.
Tokyo 107-8556 (JP)**

(72) Inventor: **Iwadare, Mitsuhiro
Saitama 351-0193 (JP)**

(74) Representative: **Herzog, Markus
Weickmann & Weickmann
Patentanwälte
Postfach 86 08 20
81635 München (DE)**

(56) References cited:
**WO-A-2007/076038    WO-A-2007/107865
WO-A-2007/129160**

**Description**

BACKGROUND OF THE INVENTION

Field of the Invention

The present invention relates to a boost pressure controller for an internal combustion engine, for controlling boost pressure.

Description of the Related Art

Conventionally, there has been proposed a boost pressure controller for an internal combustion engine of this kind in Japanese Laid-Open Patent Publication (Kokai) No. 2007-291974. This engine is provided with a supercharger, a low-pressure EGR device and a high-pressure EGR device. The supercharger includes a turbine disposed in an exhaust pipe of the engine, a compressor disposed in an intake pipe of the engine, for rotating in unison with the turbine, a plurality of variable vanes, and so forth. In the supercharger, as the degree of opening of the variable vanes is smaller, the amount of exhaust gases blown to the turbine becomes larger to increase boost pressure. Further, both the low-pressure EGR device and the high-pressure EGR device are for recirculating part of exhaust gases to the intake pipe. The low-pressure EGR device is comprised of a low-pressure EGR passage connecting between a portion of the exhaust pipe downstream of the turbine and a portion of the intake pipe upstream of the compressor, and a low-pressure EGR control valve disposed in the low-pressure EGR passage. Further, the high-pressure EGR device is comprised of a high-pressure EGR passage connecting between a portion of the exhaust pipe upstream of the turbine and a portion of the intake pipe downstream of the compressor, and a high-pressure EGR control valve disposed in the high-pressure EGR passage. The boost pressure controller controls the degree of opening of the variable vanes and the respective degrees of opening of the low-pressure control valve and opening of high-pressure EGR control valve based on the rotational speed of the engine and load thereon.

However, in general, in the supercharger including a boost pressure control valve, such as the variable vanes, the degree of opening of the boost pressure control valve is limited so as to prevent degradation of drivability due to tardiness and vibrations caused by the overshoot or undershoot of boost pressure, and failure of the supercharger due to excessive supercharging. To cope with these inconveniences, in the conventional boost pressure controller, the degree of opening of the variable vanes is controlled simply based on the rotational speed of the engine and the load thereon, and hence it is impossible to properly limit the degree of opening of the variable vanes.

For example, when the amount of exhaust gases recirculated by the low-pressure EGR device is higher in proportion than that of exhaust gases recirculated by the high-pressure EGR device, and the degree of opening of the variable vanes is small, a larger amount of exhaust gases is blown to the turbine, thereby causing , excessive rotation of the turbine. This causes very high boost pressure, resulting in failure of the supercharger or degraded drivability of the engine. To avoid such inconveniences, if the lower limit value of the vane opening of the variable vanes is made larger, when the amount of exhaust gases recirculated by the high-pressure EGR device is higher in proportion than that of exhaust gases recirculated by the low-pressure EGR device, it is sometimes impossible to obtain sufficient boost pressure. In such a case, the drivability of the engine is degraded.

In WO 2007/107805A, on which the preamble of claim 1 is based, the opening amount of the nozzle vane is corrected in accordance with the high-pressure EGR gas amount to obtain an appropriate boost pressure.

SUMMARY OF THE INVENTION

It is an object of the present invention to provide a boost pressure controller for an internal combustion engine which is provided with a low-pressure EGR device and a high-pressure EGR device, and is capable of obtaining boost pressure suitable for a ratio between the amounts of exhaust gases recirculated by the low-pressure and high-pressure EGR devices, thereby making it possible to ensure excellent drivability.

To attain the above object, the present invention provides a boost pressure controller for an internal combustion engine, in accordance with claim 1. The controller comprises a boost pressure control valve disposed in the exhaust passage, operating condition-detecting means for detecting an operating condition of the engine, boost pressure control valve opening degree-setting means for setting a degree of opening of the boost pressure control valve according to the detected operating condition of the engine, boost pressure control means for controlling boost pressure by driving the boost pressure control valve based on the set degree of opening of the boost pressure control valve, and thereby changing an amount of exhaust gases blown to the turbine, a low-pressure EGR device for recirculating part of exhaust gases discharged from the engine into the exhaust passage, from a downstream side of the turbine to an upstream side of the compressor in the intake passage, and a high-pressure EGR device for recirculating part of the exhaust gases, from an upstream side of the turbine to a downstream side of the compressor in the intake passage, lower limit value-setting means for setting a lower limit value for use in limiting the set degree of opening of the boost pressure control valve, ratio parameter-calculating means for calculating a ratio parameter that is indicative of a ratio of an amount of exhaust gases recirculated by the low-pressure EGR device to an amount of exhaust gases recirculated by the high-pressure EGR device, and lower limit value-correcting means for correcting the set lower limit value such that the lower limit value is increased as the calculated ratio parameter is larger.

With the configuration of this boost pressure controller, the boost pressure is controlled by setting the degree of opening of the boost pressure control valve disposed in the exhaust passage according to the detected operating condition of the engine, changing the amount of exhaust gases blown to the turbine by driving the boost pressure control valve based on the degree of opening of the boost pressure control valve, and thereby changing the rotating force of the compressor rotating in unison with the turbine. Further, the lower limit value-setting means sets the lower limit value for limiting the degree of opening of the boost pressure control valve to limit the lower limit value of the degree of opening of the boost pressure control valve using the lower limit value. Furthermore, the low-pressure EGR device recirculates part of exhaust gases discharged from the engine into the exhaust passage, from the downstream side of the turbine to the upstream side of the compressor in the intake passage, and the high-pressure EGR device recirculates part of exhaust gases discharged from the engine into the exhaust passage, from the upstream side of the turbine to the downstream side of the compressor in the intake passage. Further, the set lower limit value is corrected such that it is increased as the calculated ratio parameter which is indicative of the ratio of the amount of exhaust gases recirculated by the low-pressure EGR device to the amount of exhaust gases recirculated by the high-pressure EGR device is larger.

When the ratio of the amount of exhaust gases recirculated by the low-pressure EGR device becomes higher, the amount of exhaust gases passing through the turbine is increased. In this case, therefore, even with the same degree of opening of the boost pressure control valve, the amount of exhaust gases blown to the turbine is increased, which sometimes results in very high boost pressure. According to the present invention, the set lower limit value is corrected such that it is increased as the ratio of the amount of exhaust gases recirculated by the low-pressure EGR device is higher, so that under such conditions as will make the amount of exhaust gases passing through the turbine still larger, the degree of opening of the boost pressure control valve is limited such that it is increased, and accordingly, the boost pressure is controlled to be reduced. As a consequence, it is possible to obtain boost pressure suitable for the ratio between the amounts of exhaust gases recirculated by the low-pressure and high-pressure EGR devices, thereby making it possible to ensure excellent drivability.

Preferably, the boost pressure control valve is one of a variable vane capable of changing a passage area of the exhaust passage and a wastegate valve capable of changing a passage area of a bypass passage connected to the exhaust passage in a manner bypassing the turbine.

With the configuration of this preferred embodiment, by changing the passage area of the exhaust passage using the variable vane or by changing the passage area of the bypass passage bypassing the turbine using the wastegate valve, the amount of exhaust gases blown to the turbine is changed to control the boost pressure. Therefore, whichever of the variable vane and the wastegate valve may be used, it is possible to obtain boost pressure suitable for the ratio between the amounts of exhaust gases recirculated by the low-pressure and high-pressure EGR devices.

The operating condition-detecting means detects at least one of a rotational speed of the engine and an amount of fuel supplied to the engine, as the operating condition of the engine, the boost pressure controller further comprising lower limit value correction-inhibiting means for inhibiting the lower limit value from being corrected by the lower limit value-correcting means when at least one of a condition that the detected rotational speed of the engine is lower than a predetermined rotational speed and a condition that the amount of fuel supplied to the engine is smaller than a predetermined amount is satisfied.

With this configuration when at least one of the condition that the detected rotational speed of the engine is lower than a predetermined rotational speed and the condition that the amount of fuel supplied to the engine is smaller than a predetermined amount is satisfied, correction of the set lower limit value is inhibited. When the rotational speed of the engine is low or when the amount of fuel supplied to the engine is small, the boost pressure does not become too high since the flow rate and energy of exhaust gases are relatively small. Therefore, in this case, the correction of the lower limit value is inhibited, and the lower limit value set by the lower limit value-setting means is directly used to limit the degree of opening of the boost pressure control valve, whereby it is possible to obtain appropriate boost pressure.

The above and other objects, features, and advantages of the present invention will become more apparent from the following detailed description taken in conjunction with the accompanying drawings.

BRIEF DESCRIPTION OF THE DRAWINGS

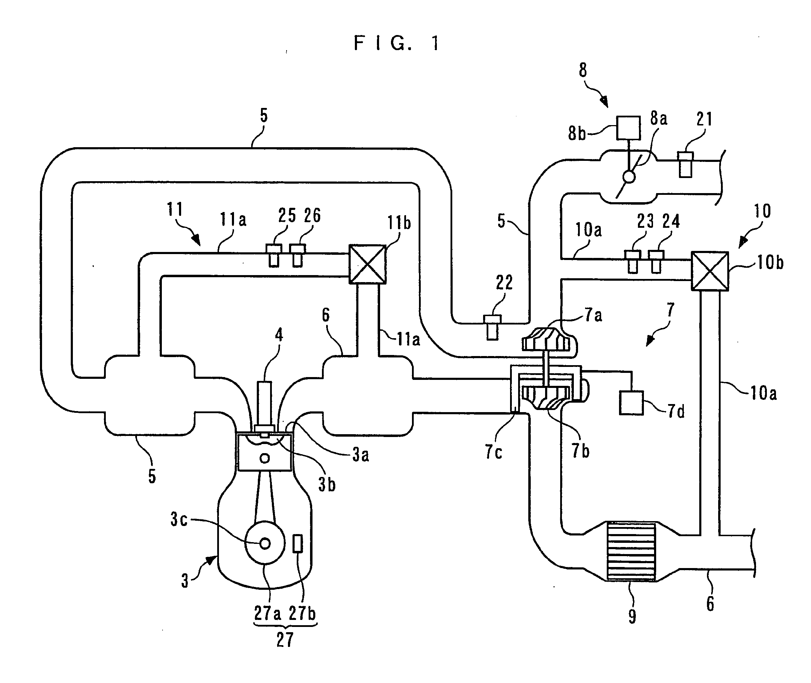

FIG. 1 is a schematic diagram of an internal combustion engine to which is applied the present invention;

FIG. 2 is a schematic block diagram of a boost pressure controller;
FIG. 3 is a flowchart showing a main flow of a boost pressure control process;
FIG. 4 is a flowchart showing a subroutine of a process for calculating a basic target opening;
FIG. 5 is a flowchart showing a subroutine of a process for calculating a feedback correction value;
FIG. 6 is a flowchart showing a subroutine of a process for calculating a lower limit value;
FIG. 7 is a flowchart showing a subroutine of a process for calculating a fixed-pressure EGR ratio;
FIG. 8 is a flowchart showing a subroutine of a process for calculating an upper limit value; and
FIG. 9 is a flowchart showing a subroutine of a process for calculating a target opening.

DETAILED DESCRIPTION OF PREFERRED EMBODIMENTS

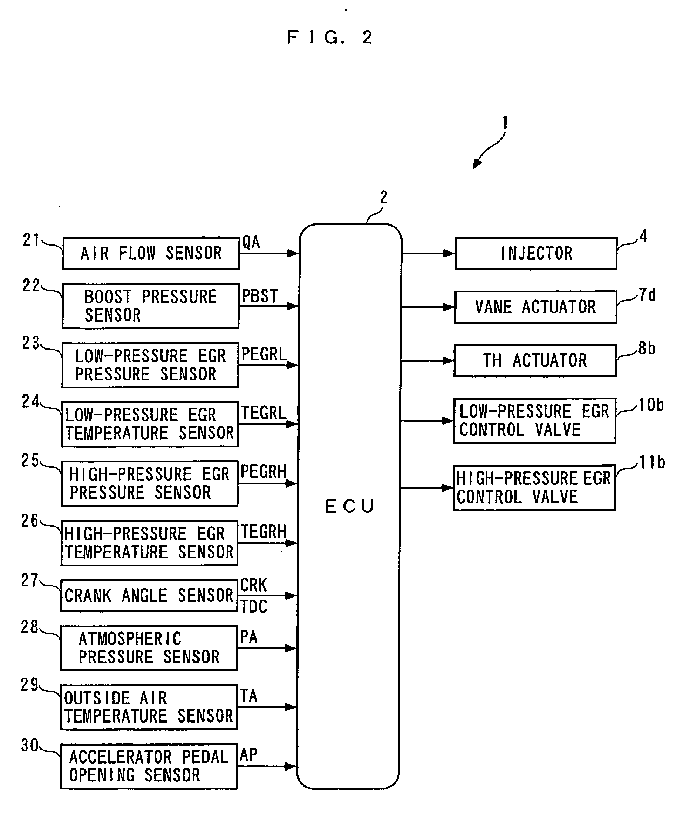

The invention will now be described in detail with reference to drawings showing a preferred embodiment thereof. As shown in FIG. 2, a boost pressure controller 1 according to the embodiment includes an ECU 2 for controlling boost pressure, and is applied to an internal combustion engine (hereinafter referred to as "the engine") 3. The engine 3 is e.g. an in-line four-cylinder diesel engine installed on a vehicle (not shown), and includes a turbocharger 7, a low-pressure EGR device 10, a high-pressure EGR device 11, and so forth.

A fuel injection valve (hereinafter referred to as "the injector") 4 is mounted through a cylinder head 3a for each cylinder of the engine 3 such that the injector 4 faces a combustion chamber 3b. The valve-opening time period and valve-opening timing of the injector 4 are controlled by a drive signal from the ECU 2, whereby a fuel injection amount QINJ and fuel injection timing TINJ of fuel injected from the injector 4 are controlled.

The turbocharger 7 is comprised of a compressor blade 7a disposed in an intake passage 5, a turbine blade 7b disposed in an exhaust passage 6, for rotating in unison with the compressor blade 7a, a plurality of variable vanes 7c (only two of which are shown), and a vane actuator 7d for actuating the variable vanes 7c.

In the turbocharger 7, as the turbine blade 7b is driven for rotation by exhaust gases flowing through the exhaust passage 6, the compressor blade 7a integrally formed with the turbine blade 7b rotates simultaneously with the rotation of the turbine blade 7b, whereby a supercharging operation for supercharging intake air is carried out.

The variable vanes 7c are pivotally mounted on a wall of a housing, not shown, accommodating the turbine blade 7b, and are mechanically connected to the vane actuator 7d. The degree of opening of the variable vanes 7c is controlled by the ECU 2 via the vane actuator 7d. As a consequence, as the passage area of the exhaust passage 6 is changed to change the amount of exhaust gases blown to the turbine blade 7b, the rotational speed of the turbine blade 7b and the compressor blade 7a is changed, whereby boost pressure is controlled. More specifically, as the degree of opening of the variable vanes 7c is smaller, the amount of exhaust gases blown to the turbine blade 7b becomes larger, whereby the boost pressure becomes higher, and when the variable vanes 7c are in a fully-open state, the boost pressure is reduced to substantially 0 (is placed in a non-supercharged state).

An air flow sensor 21, a throttle valve mechanism 8, and a boost pressure sensor 22 are arranged in the intake passage 5 of the engine 3 from upstream to downstream in the mentioned order. The air flow sensor 21 is disposed at a location upstream of the compressor blade 7a, and detects an amount QA of intake air drawn into the engine 3 to deliver a signal indicative of the sensed intake air amount QA to the ECU 2. The boost pressure sensor 22 is disposed at a location immediately downstream of the compressor blade 7a, and detects boost pressure PBST to deliver a signal indicative of the sensed boost pressure PBST to the ECU 2.

The throttle valve mechanism 8 includes a throttle valve 8a and a TH actuator 8b that actuates the throttle valve 8a. The throttle valve 8a is pivotally disposed in the intake passage 5. The TH actuator 8b is a combination of a motor (not shown) and a reduction gear mechanism (not shown). The degree of opening of the throttle valve 8a is controlled by the ECU 2 via the TH actuator 8b, whereby the amount of intake air passing through the throttle valve 8a is controlled.

A DPF (diesel particulate filter) 9 is disposed in the exhaust passage 6 at a location downstream of the turbine blade 7b. The DPF 9 collects particulates, such as soot, from exhaust gases to thereby purify the exhaust gases.

Both of the above-described low-pressure EGR device 10 and high-pressure EGR device 11 are provided for recirculating part of exhaust gases discharged from the engine 3 into the exhaust passage 6, to the intake passage 5.

The low-pressure EGR device 10 is comprised of a low-pressure EGR passage 10a connecting between a portion of the intake passage 5 upstream of the compressor blade 7a and a portion of the exhaust passage 6 downstream of the turbine blade 7b, and a low-pressure EGR control valve 10b for opening and closing the low-pressure EGR passage 10a.

The low-pressure EGR control valve 10b is formed by an electromagnetic valve a valve lift of which is continuously changed between a maximum value and a minimum value thereof, and is electrically connected to the ECU 2. The ECU 2 changes the degree of opening of the low-pressure EGR passage 10a via the low-pressure EGR control valve 10b to thereby control the amount of exhaust gases recirculated via the low-pressure EGR passage 10a (hereinafter referred to as "the low-pressure EGR amount").

Further, the low-pressure EGR passage 10a has a low-pressure EGR pressure sensor 23 and a low-pressure EGR temperature sensor 24 inserted therein. The low-pressure EGR pressure sensor 23 detects pressure PEGRL in the low-pressure EGR passage 10a (hereinafter referred to as "the low-pressure EGR pressure PEGRL"), and delivers a signal indicative of the sensed low-pressure EGR pressure PEGRL to the ECU 2. The low-pressure EGR temperature sensor 24 detects a temperature TEGRL in the low-pressure EGR passage 10a (hereinafter referred to as "the low-pressure EGR temperature TEGRL"), and delivers a signal indicative of the sensed low-pressure EGR temperature TEGRL to the ECU 2.

The high-pressure EGR device 11 is comprised of a high-pressure EGR passage 11 a connecting between a portion of the intake passage 5 downstream of the compressor blade 7a and a portion of the exhaust passage 6 upstream of the turbine blade 7b, and a high-pressure EGR control valve 11 b for opening and closing the high-pressure EGR passage 11 a.

The high-pressure EGR control valve 11 b is formed by an electromagnetic valve a valve lift of which is continuously changed between a maximum value and a minimum value thereof, and is electrically connected to the ECU 2. The ECU 2 changes the degree of opening of the high-pressure EGR passage 11a via the high-pressure EGR control valve 11 b to thereby control the amount of exhaust gases recirculated via the high-pressure EGR passage 11 a (hereinafter referred to as "the high-pressure EGR amount").

Further, the high-pressure EGR passage 11a has a high-pressure EGR pressure sensor 25 and a high-pressure EGR temperature sensor 26 inserted therein. The high-pressure EGR pressure sensor 25 detects pressure PEGRH in the high-pressure EGR passage 11 a (hereinafter referred to as "the high-pressure EGR pressure PEGRH"), and delivers a signal indicative of the sensed high-pressure EGR pressure PEGRH to the ECU 2. The high-pressure EGR temperature sensor 26 detects a temperature TEGRH in the high-pressure EGR passage 11 a (hereinafter referred to as "the high-pressure EGR temperature TEGRH"), and delivers a signal indicative of the sensed high-pressure EGR temperature TEGRH to the ECU 2.

Further, the engine 3 is provided with a crank angle sensor 27. The crank angle sensor 27 is comprised of a magnet rotor 27a and an MRE (magnetic resistance element) pickup 27b, and delivers a CRK signal and a TDC signal, which are both pulse signals, to the ECU 2 in accordance with rotation of a crankshaft 3c.

Each pulse of the CRK signal is delivered whenever the crankshaft 3c rotates through a predetermined angle (e.g. 1°). The ECU 2 calculates the rotational speed NE of the engine 3 (hereinafter referred to as "the engine speed NE") based on the CRK signal. The TDC signal indicates that each piston in the associated cylinder is in a predetermined crank angle position slightly before the TDC position at the start of the intake stroke, and each pulse thereof is delivered whenever the crankshaft 3c rotates through 180° when the engine 3 is of a four-cylinder type as in the present embodiment.

Further, an atmospheric pressure sensor 28 detects atmospheric pressure PA to deliver a signal indicative of the sensed atmospheric pressure PA to the ECU 2. An outside air temperature sensor 29 detects an outside air temperature TA, and delivers a signal indicative of the sensed outside air temperature TA to the ECU 2. An accelerator pedal opening sensor 30 detects a stepped-on amount AP of an accelerator pedal (not shown) of the vehicle (hereinafter referred to as "the accelerator pedal opening AP") and delivers a signal indicative of the sensed accelerator pedal opening AP to the ECU 2.

The ECU 2 is implemented by a microcomputer comprised of a CPU, a RAM, a ROM and an I/O interface (none of which are specifically shown). The ECU 2 determines an operating condition of the engine 3 in response to the signals from the aforementioned sensors 21 to 30, and based on the determined operating condition of the engine 3, performs control processes, such as a fuel injection control process including control of the fuel injection amount QINJ, and a boost pressure control process for controlling boost pressure obtained by the supercharging operation of the turbocharger 7.

In the present embodiment, the ECU 2 corresponds to operating condition-detecting means, boost pressure control valve opening degree-setting means, boost pressure control means, lower limit value-setting means, ratio parameter-calculating means, lower limit value-correcting means and lower limit value correction-inhibiting means.

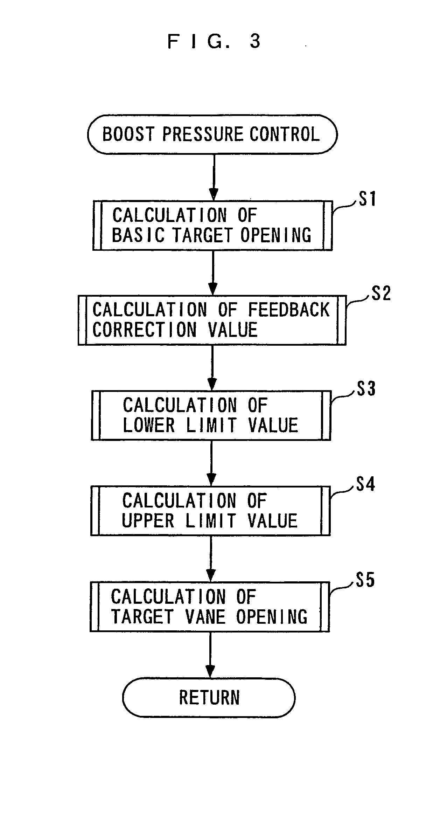

FIG. 3 is a flowchart showing a main flow of the boost pressure control process carried out by the ECU 2. The boost pressure control process is executed at a predetermined repetition period (e.g. 10 msec). In the present process, first, in a step 1 (shown as S1 in abbreviated form in FIG. 3; the following steps are also shown in abbreviated form), a basic target opening A_CMD_BASE of the variable vanes 7c is calculated.

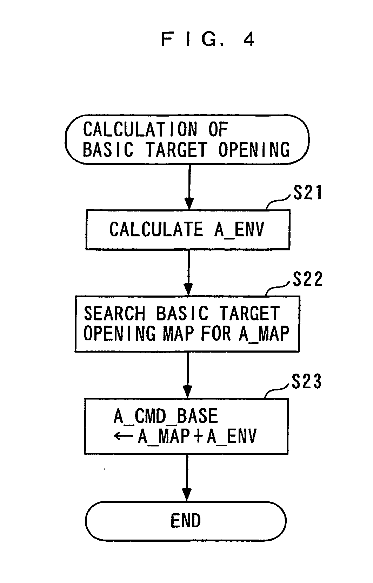

FIG. 4 shows a subroutine of a process for calculating the basic target opening. First, in a step 21, an environment-dependent correction value A_ENV of the basic target opening is calculated by searching a predetermined map (not shown) according to the detected atmospheric pressure PA and outside air temperature TA. Next, a map value A_MAP is calculated by searching a basic target opening map (not shown) according to the engine speed NE and the fuel injection amount QINJ (step 22). Then, the basic target opening A_CMD_BASE is calculated by adding the environment-dependent correction value A_ENV calculated in the step 21 to the calculated map value A_MAP (step 23), followed by terminating the present process.

Referring again to FIG. 3, in a step 2 following the above-described step 1, there is calculated a feedback correction value A_FB for correcting the basic target opening A_CMD_BASE calculated in the step 1.

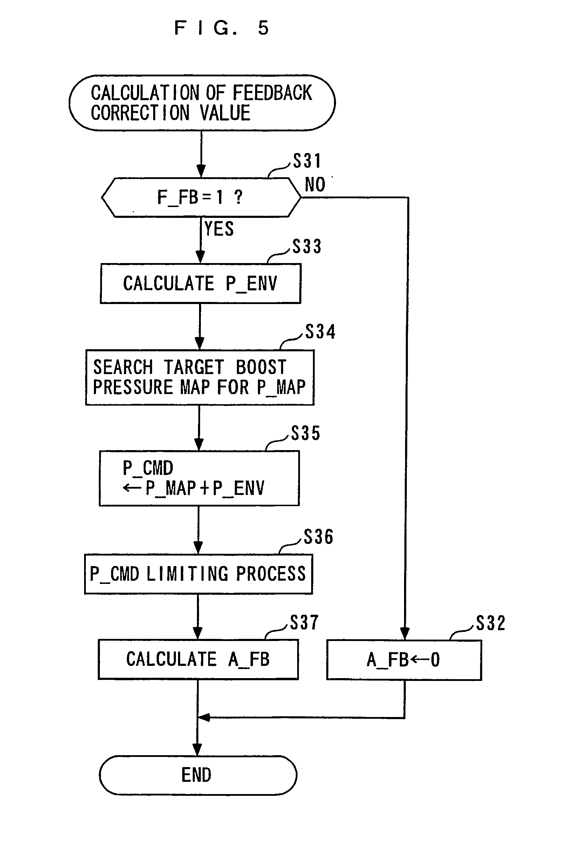

FIG. 5 shows a subroutine of a process for calculating the feedback correction value. First, in a step 31, it is determined whether or not a feedback control flag F_FB is equal to 1. When the engine speed NE and the fuel injection amount QINJ are within respective predetermined ranges, it is judged that conditions for executing feedback control of boost pressure are satisfied, so that the feedback control flag F_FB is set to 1.

If the answer to the question of the step 31 is negative (NO), i.e. if the conditions for executing the feedback control of boost pressure are not satisfied, the feedback correction value A_FB is set to 0 (step 32), followed by terminating the present process.

On the other hand, if the answer to the question of the step 31 is affirmative (YES), an environment-dependent correction value P_ENV of target boost pressure is calculated by searching a predetermined map (not shown) according to the atmospheric pressure PA and the outside air temperature TA (step 33).

Next, a map value P_MAP is calculated by searching a target boost pressure map (not shown) according to the engine speed NE and the fuel injection amount QINJ (step 34). Then, target boost pressure P_CMD is calculated by adding the environment-dependent correction value P_ENV calculated in the step 33 to the calculated map value P_MAP (step 35).

Next, a limiting process is carried out on the calculated target boost pressure P_CMD (step 36). This limiting process is executed by searching a predetermined map (not shown) for an upper limit value P_LMTH of the boost pressure according to the engine speed NE and the fuel injection amount QINJ, and setting the target boost pressure P_CMD to the upper limit value P_LMTH when the calculated target boost pressure P_CMD is larger than the upper limit value P_LMTH.

Next, the feedback correction value A_FB for use in calculating the target opening of the variable vanes 7c is calculated according to the target boost pressure P_CMD calculated as described above and the boost pressure PBST detected by the boost pressure sensor 22 (step 37), followed by terminating the present process. This calculation of the feedback correction value A_FB is performed e.g. by PID feedback control such that the boost pressure PBST converges to the target boost pressure P_CMD.

Referring again to FIG. 3, in a step 3 following the above-described step 2, there is calculated a lower limit value LMTL for limiting the target opening of the variable vanes 7c.

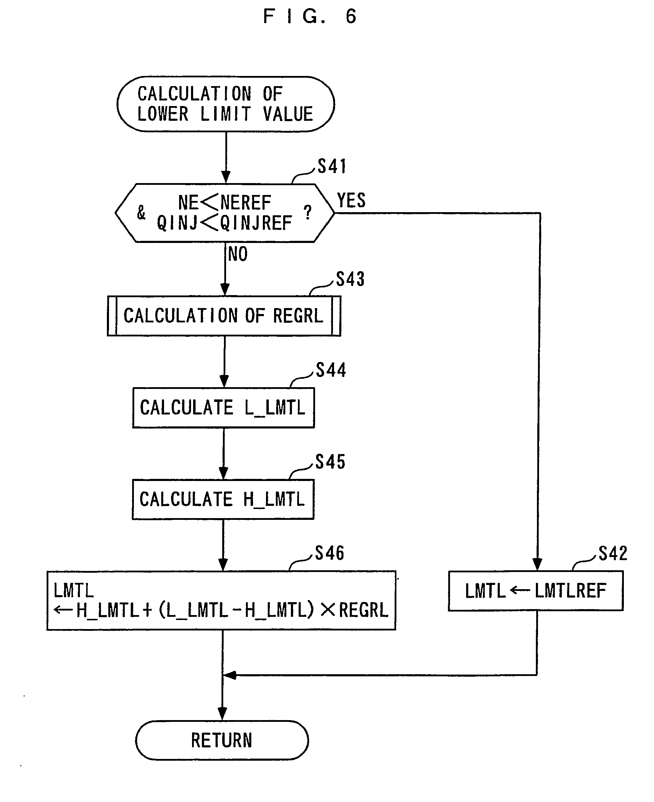

FIG. 6 shows a subroutine of a process for calculating the lower limit value. First, in a step 41, it is determined whether or not the engine speed NE is lower than a predetermined engine speed NEREF, and at the same time the fuel injection amount QINJ is smaller than a predetermined amount QINJREF. If the answer to this question is negative (NO), a low-pressure EGR ratio REGRL is calculated (step 43). The low-pressure EGR ratio REGRL represents a ratio of a low-pressure EGR amount QEGRL, i.e. the amount of exhaust gases recirculated by the low-pressure EGR device 10, to the total amount of exhaust gases recirculated by the low-pressure EGR device 10 and the high-pressure EGR device 11 (hereinafter referred to as "the total EGR amount").

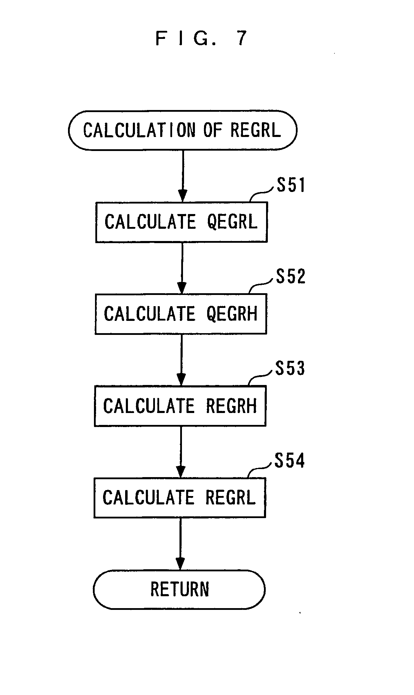

FIG. 7 shows a subroutine of a process for calculating the low-pressure EGR ratio REGRL. First, in a step 51, the low-pressure EGR amount QEGRL is calculated based on an equation of state of gas by using the low-pressure EGR pressure PEGRL detected by the low-pressure EGR pressure sensor 23 and the low-pressure EGR temperature TEGRL detected by the low-pressure EGR temperature sensor 24.

Next, the high-pressure EGR amount QEGRH is calculated based on the equation of state of gas by using the high-pressure EGR pressure PEGRH detected by the high-pressure EGR pressure sensor 25 and the high-pressure EGR temperature TEGRH detected by the high-pressure EGR temperature sensor 26 (step 52). Then, the high-pressure EGR amount QEGRH is divided by the sum of the low-pressure EGR amount QEGRL and the high-pressure EGR amount QEGRH (= QEGRH/ (QEGRL+ QEGRH)), whereby a high-pressure EGR ratio REGRH, which is a ratio of the high-pressure EGR amount QEGRH to the total EGR amount, is calculated (step 53).

Next, by subtracting the high-pressure EGR ratio REGRH from 1 (= 1-REGRH), the low-pressure EGR ratio REGRL is calculated (step 54), followed by terminating the present process.

Referring again to FIG. 6, in a step 44 following the above-described step 43, a low pressure EGR-time lower limit value L_LMTL is calculated by searching a predetermined map (not shown) according to the engine speed NE and the fuel injection amount QINJ. The low pressure EGR-time lower limit value L_LMTL is applied when exhaust gases are recirculated by using only the low-pressure EGR device 10 without using the high-pressure EGR device 11. As the engine speed NE is higher and the fuel injection amount QINJ is larger, the flow rate and energy of exhaust gases increase to make the boost pressure liable to become too large. To avoid such inconveniences, in the above map, the lower limit value L_LMTL is set to a larger value so as to strictly limit the target opening of the variable vanes 7c.

Next, a high pressure EGR-time lower limit value H_LMTL is calculated by searching a predetermined map (not shown) according to the engine speed NE and the fuel injection amount QINJ (step 45). The high pressure EGR-time lower limit value H_LMTL is applied when exhaust gases are recirculated by using only the high-pressure EGR device 11 without using the low-pressure EGR device 10. In this map, as the engine speed NE is higher and the fuel injection amount QINJ is larger, the lower limit value H_LMTL is set to a larger value for the same reason given in the description of the low pressure EGR-time lower limit value L_LMTL. Further, the high pressure EGR-time lower limit value H_LMTL is set to a smaller value than the low pressure EGR-time lower limit value L_LMTL in the whole regions of the engine speed NE and the fuel injection amount QINJ. This is because even with the same degree of opening of the variable vanes 7c, when exhaust gases are recirculated by the high-pressure EGR device 11, the flow rate of exhaust gases passing through the turbine blade 7b lowers to make insufficient boost pressure liable to occur, compared with when exhaust gases are recirculated by the low-pressure EGR device 10.

Next, by using the low-pressure EGR ratio REGRL and the low pressure EGR-time and high pressure EGR-time lower limit values L_LMTL and H_LMTL calculated in the respective steps 43 to 45, the lower limit value LMTL is calculated by the following equation (1) (step 46), followed by terminating the present process.

$$\text{LMTL} = \text{H\_LMTL} + (\text{L\_LMTL} - \text{H\_LMTL}) \times \text{REGRL} \ ... \ (1)$$

As is apparent from this equation (1), the lower limit value LMTL is calculated by interpolation according to the low-pressure EGR ratio REGRL such that it assumes a value between the high pressure EGR-time lower limit value H_LMTL and the low pressure EGR-time lower limit value L_LMTL, and is calculated as a larger value as the low-pressure EGR ratio REGRL is larger.

On the other hand, if the answer to the question of the step 41 is affirmative (YES), i.e. if NE < NEREF and at the same time QINJ < QINJREF hold, the flow rate and energy of exhaust gases discharged from the engine 3 into the exhaust passage 6 are relatively small, and hence it is judged that it is unnecessary to correct the lower limit value LMTL, so that the lower limit value LMTL is set to a predetermined value LMTLREF (step 42), followed by terminating the present process.

Referring again to FIG. 3, in a step 4 following the above-described step 3, there is calculated an upper limit value LMTH for limiting the target opening of the variable vanes 7c.

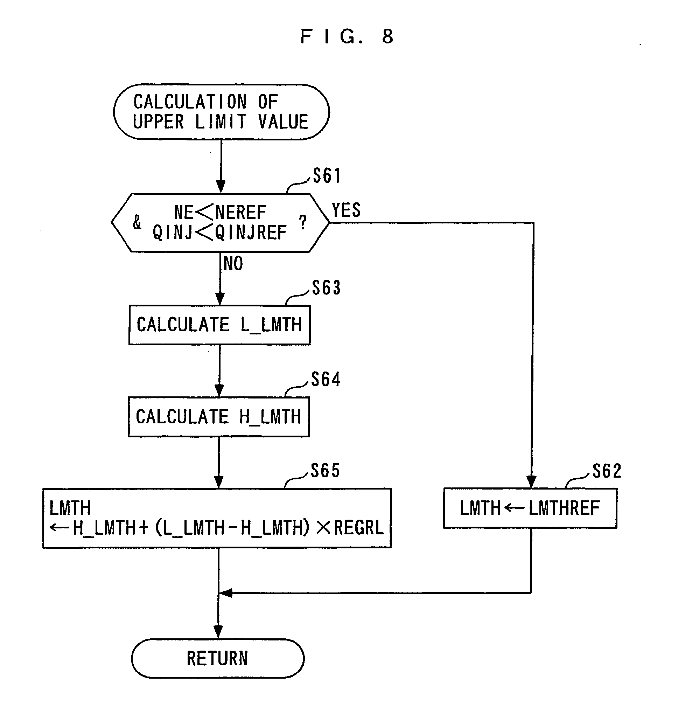

FIG. 8 shows a subroutine of a process for calculating the upper limit value. First, in a step 61, it is determined whether or not the engine speed NE and the fuel injection amount QINJ are smaller than the predetermined engine speed NEREF and the predetermined amount QINJREF, respectively. If the answer to this question is affirmative (YES), it is judged that it is unnecessary to correct the upper limit value LMTH, and the upper limit value LMTH is set to a predetermined value LMTHREF (step 62), followed by terminating the present process.

On the other hand, if the answer to the question of the step 61 is negative (NO), a low pressure EGR-time upper limit value L_LMTH is calculated by searching a predetermined map (not shown) according the engine speed NE and the fuel injection amount QINJ (step 63). The low pressure EGR-time upper limit value L_LMTH is applied when exhaust gases are recirculated by using only the low-pressure EGR device 10. In this map, as the engine speed NE is higher and the fuel injection amount QINJ is larger, the upper limit value L_LMTH is set to a larger value.

Next, a high pressure EGR-time upper limit value H_LMTH is calculated by searching a predetermined map (not shown) according the engine speed NE and the fuel injection amount QINJ (step 64). The high pressure EGR-time upper limit value H_LMTH is applied when exhaust gases are recirculated by using only the high-pressure EGR device 11. In this map, as the engine speed NE is higher and the fuel injection amount QINJ is larger, the upper limit value H_LMTH is set to a larger value. Further, the higher limit value H_LMTH is set to a smaller value than the low pressure EGR-time upper limit value L_LMTH in the whole regions of the engine speed NE and the fuel injection amount QINJ. This is because even with the same degree of opening of the variable vanes 7c, when exhaust gases are recirculated by the high-pressure EGR device 11, the flow rate of exhaust gases passing through the turbine blade 7b lowers to make insufficient boost pressure liable to occur, compared with when exhaust gases are recirculated by the low-pressure EGR device 10.

Next, by using the low-pressure EGR ratio REGRL calculated in the above-mentioned step 43 and the upper limit values L_LMTH and H_LMTH calculated in the steps 63 and 64, the upper limit value LMTH is calculated by the following equation (2) (step 65), followed by terminating the present process.

$$\text{LMTH} = \text{H\_LMTH} + (\text{L\_LMTH} - \text{H\_LMTH}) \times \text{REGRL} ... \ (2)$$

As is apparent from this equation (2), the upper limit value LMTH is calculated by interpolation according to the low-pressure EGR ratio REGRL such that it assumes a value between the high pressure EGR-time upper limit value H_LMTH and the low pressure EGR-time upper limit value L_LMTH, and is calculated as a larger value as the low-pressure EGR ratio REGRL is larger.

Referring again to FIG. 3, in a step 5 following the above-described step 4, a target opening A_CMD of the variable vanes 7c is finally calculated, followed by terminating the present process.

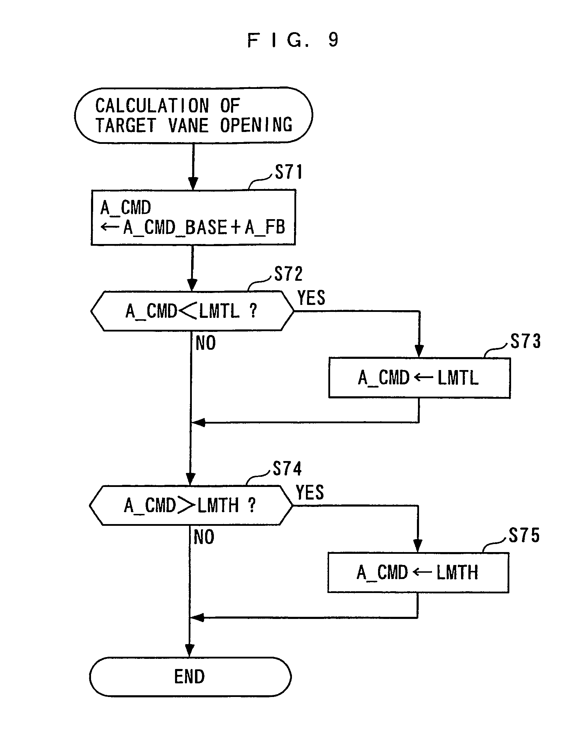

FIG. 9 shows a subroutine of a process for calculating the target vane opening. First, in a step 71, the target vane opening A_CMD of the variable vanes 7c is calculated by adding the feedback correction value A_FB calculated in the step 2 to the basic target opening A_CMD_BASE calculated in the step 1.

Next, in a step 72 et seq., a limiting process is carried out on the calculated target vane opening A_CMD. More specifically, it is determined whether or not the target vane opening A_CMD is smaller than the lower limit value LMTL calculated in the above-described step 42 or 46 (step 72). If the answer to this question is affirmative (YES), i.e. if A_CMD < LMTL holds, the target vane opening A_CMD is set to the lower limit value LMTL (step 73).

If the answer to the question of the step 72 is negative (NO), it is determined whether or not the target vane opening A_CMD is larger than the upper limit value LMTH calculated in the step 62 or 65 (step 74). If the answer to this question is affirmative (YES), i.e. if A_CMD > LMTH holds, the target vane opening A_CMD is set to the upper limit value LMTH (step 75), and the present process is terminated. On the other hand, if the answer to the question of the step 64 is negative (NO), the present process is immediately terminated.

As described hereinabove, according to the present embodiment, the low-pressure EGR ratio REGRL, which is a ratio of the low-pressure EGR amount QEGRL to the total EGR amount, is calculated (step 54 in FIG. 7), and as the low-pressure EGR amount QEGRL is larger, the lower limit value LMTL for limiting the vane opening of the variable vanes 7c is increased for correction to thereby cause the boost pressure PBST to be increased. Therefore, it is possible to obtain the boost pressure PBST suitable for the low-pressure EGR ratio REGRL and the high-pressure EGR ratio REGRH, thereby making it possible to ensure excellent drivability.

Further, when the engine speed NE is lower than the predetermined engine speed NEREF, and at the same time the fuel injection amount QINJ is smaller than the predetermined amount QINJREF, the lower limit value LMTL is not corrected, so that it is possible to obtain an appropriate boost pressure PBST.

Furthermore, the upper limit value LMTH for limiting the vane opening of the variable vanes 7c is set, and this upper limit value LMTH is corrected according to the low-pressure EGR ratio REGRL. This prevents the vane opening of the variable vanes 7c from becoming too large. Therefore, it is possible to obtain sufficient boost pressure PBST suitable for the low-pressure EGR ratio REGRL and the high-pressure EGR ratio REGRH, thereby making it possible to ensure excellent drivability and excellent reduction of exhaust emissions. Further, also under such conditions as will cause the vane opening of the variable vanes 7c to be largely reduced from the upper limit value LMTH side to the lower limit value LMTL side, it is possible to minimize the influence of response delay by the vane actuator 7d, which makes it possible to ensure excellent drivability and excellent reduction of exhaust emissions.

It should be noted that the present invention is by no means limited to the embodiment described above, but it can be practiced in various forms. For example, although in the embodiment, the variable vanes 7c that change the passage area of the exhaust passage 6 are used as a boost pressure control valve for changing boost pressure, this is not limitative, but a wastegate valve, which changes the passage area of a bypass passage connected to the exhaust passage in a manner bypassing the turbine blade 7b, may be used. In this case as well, as the low-pressure EGR ratio REGRL is larger, a lower limit value of the degree of opening of the wastegate valve is corrected such that it is increased, whereby boost pressure is controlled to be reduced. This makes it possible to obtain the same advantageous effects as provided by the above-described variable vanes 7c.

Further, although in the above-described embodiment, the low-pressure EGR ratio REGRL is used as a ratio parameter for correcting the lower limit value LMTL, the low-pressure EGR ratio REGRL may be replaced e.g. by the high-pressure EGR ratio REGRH or a ratio of the low pressure EGR amount to the high-pressure EGR amount.

Furthermore, although in the above-described embodiment, the correction of the lower limit value LMTL is inhibited when the condition that the engine speed NE is lower than the predetermined engine speed NEREF and the condition that the fuel injection amount QINJ is smaller than the predetermined amount QINJREF are both satisfied, this is not limitative, but the correction of the lower limit value LMTL may be inhibited when one of the conditions is satisfied. Further, the fuel injection amount QINJ may be replaced by any other suitable parameter, such as the intake air amount or demanded torque, insofar as it is indicative of load on the engine 3.

Furthermore, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

A boost pressure controller for an internal combustion engine provided with a low-pressure and a high-pressure EGR devices and capable of obtaining boost pressure suitable for a ratio between the amounts of exhaust gases recirculated by the low-pressure and high-pressure EGR devices, thereby making it possible to ensure excellent drivability. The boost pressure controller controls the boost pressure based on the opening of a boost pressure control valve, set according to detected operating conditions of the engine. A lower limit value for limiting the opening of the boost pressure control valve is set, and a ratio parameter indicative of a ratio of an amount of exhaust gases recirculated by the low-pressure EGR device to an amount of exhaust gases recirculated by the high-pressure EGR device is calculated. The lower limit value is corrected such that it is increased as the ratio parameter is larger.

**Claims**

1. A boost pressure controller for an internal combustion engine (3), including:

a turbine (7b) disposed in an exhaust passage (6) of the engine,
a compressor (7a) disposed in an intake passage (5) of the engine, for rotating in unison with said turbine,
a boost pressure control valve (7c) disposed in the exhaust passage,
operating condition-detecting means (27) for detecting at least one of a rotational speed of the engine and an amount of fuel supplied to the engine, as the operating condition of the engine,
boost pressure control valve opening degree-setting means (7d) for setting a degree of opening of said boost pressure control valve according to the detected operating condition of the engine,
boost pressure control means for controlling boost pressure by driving said boost pressure control valve based on the set degree of opening of said boost pressure control valve, and thereby changing an amount of exhaust gases blown to said turbine,
a low-pressure EGR device (10) for recirculating part of exhaust gases discharged from the engine into the exhaust passage, from a downstream side of said turbine to an upstream side of said compressor in the intake passage,
a high-pressure EGR device (11) for recirculating part of the exhaust gases, from an upstream side of said turbine to a downstream side of said compressor in the intake passage,
lower limit value-setting means (S3) for setting a lower limit value for use in limiting the set degree of opening of said boost pressure control valve;
ratio parameter-calculating means for calculating a ratio parameter that is indicative of a ratio of an amount of exhaust gases recirculating by said low-pressure EGR device to an amount of exhaust gases recirculated by said high-pressure EGR device; and
lower limit value-correcting means for correcting the set lower limit value such that the lower limit value is increased as the calculated ratio parameter is larger,
**characterized in that**
the boost pressure controller further comprises lower limit value correction-inhibiting means for inhibiting the lower limit value from being corrected by said lower limit value-correcting means when at least one of a condition that the detected rotational speed of the engine is lower than a predetermined rotational speed and a condition that the amount of fuel supplied to the engine is smaller than a predetermined amount is satisfied.

2. A boost pressure controller as claimed in claim 1, wherein said boost pressure control valve is one of a variable vane (7c) capable of changing a passage area of the exhaust passage and a wastegate valve capable of changing a passage area of a bypass passage connected to the exhaust passage in a manner bypassing said turbine.

**Patentansprüche**

1. Ladedfuckregler für einen Verbrennungsmotor (3), enthaltend:

eine Turbine (7b), die in einem Auslasskanal (6) des Motors angeordnet ist,
einen Kompressor (7a), der in einem Einlasskanal (5) des Motors zur gemeinsamen Drehung mit der Turbine angeordnet ist,
ein Ladedruck-Steuerventil (7c), das in dem Auslasskanal angeordnet ist,
Betriebszustand-Erfassungsmittel (27) zum Erfassen einer Drehzahl des Motors und/oder einer dem Motor zugeführten Kraftstoffmenge als der Betriebszustand des Motors,
Ladedruck-Steuerventilöffnungsgrad-Setzmittel (7d) zum Setzen eines Öffnungsgrads des Ladedruck-Steuerventils gemäß dem erfassten Betriebszustand des Motors,
Ladedruck-Steuerungsmittel zum Steuern/Regeln des Ladedrucks durch Antrieb des Ladedruck-Steuerventils basierend auf dem gesetzten Öffnungsgrad des Ladedruck-Steuerventils, um hierdurch eine zur Turbine geblasene Abgasmenge zu verändern,
eine Niederdruck-AGR-Vorrichtung (10) zum Rückführen eines Teils von Abgasen, die von dem Motor in dem Auslasskanal abgegeben werden, von einer stromabwärtigen Seite der Turbine zu einer stromaufwärtigen Seite des Kompressors in dem Einlasskanal,

eine Hochdruck-AGR-Vorrichtung (11) zum Rückführen eines Teils der Abgasen von einer stromaufwärtigen Seite der Turbine zu einer stromabwärtigen Seite des Kompressors in dem Einlasskanal,

Untergrenzwert-Setzmittel (S3) zum Setzen eines unteren Grenzwerts zur Verwendung bei der Begrenzung des gesetzten Öffnungsgrads des Ladedruck-Steuerventils,

Verhältnisparameter-Berechnungsmittel zum Berechnen eines Verhältnisparameters, der ein Verhältnis einer durch die Niederdruck-AGR-Vorrichtung rückgeführten Abgasmenge zu einer von der Hochdruck-AGR-Vorrichtung rückgeführten Abgasmenge angibt; und

Untergrenzwert-Korrekturmittel zum Korrigieren des gesetzten unteren Grenzwerts derart, dass der untere Grenzwert erhöht wird, wenn der berechnete Verhältnisparameter größer wird,

**dadurch gekennzeichnet, dass**

der Ladedruckregler ferner ein Untergrenzwert-Korrektur-Verhinderungsmittel aufweist, um zu verhindern, dass der untere Grenzwert durch das Untergrenzwert-Korrekturmittel korrigiert wird,

wenn eine Bedingung, dass die erfasste Drehzahl des Motors niedriger als eine vorbestimmte Drehzahl ist, und/oder eine Bedingung, dass die dem Motor zugeführte Kraftstoffmenge kleiner als eine vorbestimmte Menge ist, erfüllt ist.

2. Ladedruckregler nach Anspruch 1, worin das Ladedruck-Steuerventil ein verstellbarer Flügel (7c) ist, der in der Lage ist, eine Durchlassfläche des Ausgangskanals zu verändern, und/oder ein Wastegate-Ventil, das in der Lage ist, eine Durchtrittsfläche eines Bypasskanals zu verändern, der mit dem Auslasskanal unter Umgehung der Turbine verbunden ist.

## Revendications

1. Régulateur de pression de suralimentation pour un moteur à combustion interne (3), incluant :

une turbine (7b) disposée dans un passage d'échappement (6) du moteur,

un compresseur (7a) disposé dans un passage d'admission (5) du moteur, pour tourner à l'unisson de ladite turbine,

une soupape de régulation de pression de suralimentation (7c) disposée dans le passage d'échappement,

des moyens de détection d'état de fonctionnement (27) permettant de détecter au moins l'une d'une vitesse de rotation du moteur et d'une quantité de carburant fourni au moteur, en tant que condition de fonctionnement du moteur,

des moyens d'établissement de degré d'ouverture de soupape de régulation de pression de suralimentation (7d) permettant d'établir un degré d'ouverture de ladite soupape de régulation de pression de suralimentation selon la condition de fonctionnement détectée du moteur,

des moyens de régulation de pression de suralimentation permettant de réguler la pression de suralimentation en entraînant ladite soupape de régulation de pression de suralimentation en se basant sur le degré d'ouverture établi de ladite soupape de régulation de pression de suralimentation, et en changeant ainsi une quantité de gaz d'échappement soufflés en direction de ladite turbine,

un dispositif RGE basse pression (10) permettant de recirculer une partie des gaz d'échappement évacués du moteur dans le passage d'échappement, d'un côté aval de ladite turbine à un côté amont dudit compresseur dans le passage d'admission,

un dispositif RGE haute pression (11) permettant de recirculer une partie des gaz d'échappement, d'un côté amont de ladite turbine à un côté aval dudit compresseur dans le passage d'admission,

des moyens d'établissement de valeur limite inférieure (S3) permettant d'établir une valeur limite inférieure à utiliser pour limiter le degré d'ouverture établi de ladite soupape de régulation de pression de suralimentation ;

des moyens de calcul de paramètre de rapport permettant de calculer un paramètre de rapport qui est indicatif d'un rapport entre une quantité de gaz d'échappement recirculant par ledit dispositif RGE basse pression et une quantité de gaz d'échappement recirculés par ledit dispositif RGE haute pression ; et

des moyens de correction de valeur limite inférieure permettant de corriger la valeur limite inférieure établie de telle sorte que la valeur limite inférieure est augmentée lorsque le paramètre de rapport calculé est plus grand,

**caractérisé en ce que**

le régulateur de pression de suralimentation comprend en outre des moyens d'inhibition de correction de valeur limite inférieure permettant d'inhiber la correction de la valeur limite inférieure par lesdits moyens de correction de valeur limite inférieure lorsqu'au moins l'un parmi un état selon lequel la vitesse de rotation détectée du moteur est inférieure à une vitesse de rotation prédéterminée et un état selon lequel la quantité de carburant fourni au moteur est plus petite qu'une quantité prédéterminée est satisfait.

2. Régulateur de pression de suralimentation selon la revendication 1, dans lequel ladite soupape de régulation de pression de suralimentation est l'une parmi une aube fixe à incidence variable (7c) capable de changer une aire de passage du passage d'échappement et d'une soupape de décharge capable de changer une aire de passage d'un passage de contournement raccordé au passage d'échappement d'une manière contournant ladite turbine.

FIG. 1

EP 2 189 647 B1

F I G. 2

21 — AIR FLOW SENSOR | QA → ECU
22 — BOOST PRESSURE SENSOR | PBST →
23 — LOW-PRESSURE EGR PRESSURE SENSOR | PEGRL →
24 — LOW-PRESSURE EGR TEMPERATURE SENSOR | TEGRL →
25 — HIGH-PRESSURE EGR PRESSURE SENSOR | PEGRH →
26 — HIGH-PRESSURE EGR TEMPERATURE SENSOR | TEGRH →
27 — CRANK ANGLE SENSOR | CRK / TDC →
28 — ATMOSPHERIC PRESSURE SENSOR | PA →
29 — OUTSIDE AIR TEMPERATURE SENSOR | TA →
30 — ACCELERATOR PEDAL OPENING SENSOR | AP →

ECU →
INJECTOR — 4
VANE ACTUATOR — 7d
TH ACTUATOR — 8b
LOW-PRESSURE EGR CONTROL VALVE — 10b
HIGH-PRESSURE EGR CONTROL VALVE — 11b

F I G. 3

```
           ┌────────────────────────────┐
           │   BOOST PRESSURE CONTROL   │
           └────────────────────────────┘
                        │
                        ▼
        ┌─────────────────────────────────┐  S1
        │      CALCULATION  OF            │
        │   BASIC TARGET OPENING          │
        └─────────────────────────────────┘
                        │
                        ▼
        ┌─────────────────────────────────┐  S2
        │  CALCULATION OF FEEDBACK        │
        │  CORRECTION VALUE               │
        └─────────────────────────────────┘
                        │
                        ▼
        ┌─────────────────────────────────┐  S3
        │      CALCULATION  OF            │
        │    LOWER LIMIT VALUE            │
        └─────────────────────────────────┘
                        │
                        ▼
        ┌─────────────────────────────────┐  S4
        │      CALCULATION  OF            │
        │    UPPER LIMIT VALUE            │
        └─────────────────────────────────┘
                        │
                        ▼
        ┌─────────────────────────────────┐  S5
        │      CALCULATION  OF            │
        │   TARGET VANE OPENING           │
        └─────────────────────────────────┘
                        │
                        ▼
           ┌────────────────────────────┐
           │          RETURN            │
           └────────────────────────────┘
```

F I G. 4

```
          ╭─────────────────────────╮
          │  CALCULATION OF          │
          │  BASIC TARGET OPENING    │
          ╰─────────────────────────╯
                      │
                      ▼              ╭S21
          ┌─────────────────────────┐
          │   CALCULATE  A_ENV       │
          └─────────────────────────┘
                      │
                      ▼              ╭S22
          ┌─────────────────────────┐
          │  SEARCH  BASIC  TARGET   │
          │  OPENING MAP FOR A_MAP   │
          └─────────────────────────┘
                      │
                      ▼              ╭S23
          ┌─────────────────────────┐
          │   A_CMD_BASE             │
          │   ← A_MAP + A_ENV        │
          └─────────────────────────┘
                      │
                      ▼
          ╭─────────────────────────╮
          │          END             │
          ╰─────────────────────────╯
```

F I G. 5

```
        ┌─────────────────────────────┐
        │ CALCULATION OF FEEDBACK     │
        │ CORRECTION VALUE            │
        └─────────────────────────────┘
                      │
                      ▼
                                    S31
              ╱─────────────╲         NO
            〈   F_FB = 1 ?   〉─────────────────┐
              ╲─────────────╱                   │
                    │ YES                        │
                    ▼          S33               │
        ┌─────────────────────────┐              │
        │   CALCULATE  P_ENV      │              │
        └─────────────────────────┘              │
                    │                            │
                    ▼          S34               │
        ┌─────────────────────────┐              │
        │ SEARCH  TARGET  BOOST   │              │
        │ PRESSURE MAP FOR P_MAP  │              │
        └─────────────────────────┘              │
                    │                            │
                    ▼          S35               │
        ┌─────────────────────────┐              │
        │  P_CMD                  │              │
        │  ←P_MAP+P_ENV           │              │
        └─────────────────────────┘              │
                    │                            │
                    ▼          S36               │
        ┌─────────────────────────┐              │
        │ P_CMD LIMITING PROCESS  │              │
        └─────────────────────────┘              │
                    │                            │
                    ▼          S37               ▼          S32
        ┌─────────────────────────┐   ┌─────────────────────────┐
        │   CALCULATE  A_FB       │   │   A_FB←0                │
        └─────────────────────────┘   └─────────────────────────┘
                    │                            │
                    ▼◄───────────────────────────┘
                ┌─────────┐
                │   END   │
                └─────────┘
```

EP 2 189 647 B1

F I G. 6

```
        ┌─────────────────────┐
        │   CALCULATION OF    │
        │  LOWER LIMIT VALUE  │
        └──────────┬──────────┘
                   │
                   ▼                    S41
          ⟨  NE<NEREF        ⟩  YES ──────────────┐
          ⟨ & QINJ<QINJREF ? ⟩                    │
                   │                               │
                   │NO                             │
                   ▼              S43              │
        ┌─────────────────────┐                   │
        │ CALCULATION OF REGRL │                  │
        └──────────┬──────────┘                   │
                   │                               │
                   ▼              S44              │
        ┌─────────────────────┐                   │
        │   CALCULATE L_LMTL  │                   │
        └──────────┬──────────┘                   │
                   │                               │
                   ▼              S45              │
        ┌─────────────────────┐                   │
        │   CALCULATE H_LMTL  │                   │
        └──────────┬──────────┘                   │
                   │                               │
                   ▼              S46              ▼          S42
┌──────────────────────────────────┐   ┌──────────────────────┐
│ LMTL                             │   │   LMTL ← LMTLREF     │
│ ←H_LMTL+(L_LMTL−H_LMTL)×REGRL    │   └──────────┬───────────┘
└──────────────────┬───────────────┘              │
                   │◄─────────────────────────────┘
                   ▼
        ┌─────────────────────┐
        │       RETURN        │
        └─────────────────────┘
```

F I G. 7

```
        ┌─────────────────────────────┐
        │   CALCULATION OF REGRL      │
        └─────────────────────────────┘
                      │
                      ▼                 ⟋S51
        ┌─────────────────────────────┐
        │     CALCULATE  QEGRL        │
        └─────────────────────────────┘
                      │
                      ▼                 ⟋S52
        ┌─────────────────────────────┐
        │     CALCULATE  QEGRH        │
        └─────────────────────────────┘
                      │
                      ▼                 ⟋S53
        ┌─────────────────────────────┐
        │     CALCULATE  REGRH        │
        └─────────────────────────────┘
                      │
                      ▼                 ⟋S54
        ┌─────────────────────────────┐
        │     CALCULATE  REGRL        │
        └─────────────────────────────┘
                      │
                      ▼
        ┌─────────────────────────────┐
        │          RETURN             │
        └─────────────────────────────┘
```

F I G.  8

```
      ┌─────────────────────┐
      │   CALCULATION OF     │
      │  UPPER LIMIT VALUE   │
      └─────────────────────┘
                 │
                 │            ╭S61
                 ▼
         ◁───────────────────▷  YES
        ╱   NE＜NEREF       ╲ ────────────────┐
       ◁ &                  ▷                 │
        ╲  QINJ＜QINJREF  ? ╱                  │
         ◁──────────┬──────▷                   │
              NO    │                          │
                    │       ╭S63               │
                    ▼                          │
         ┌────────────────────┐                │
         │  CALCULATE L_LMTH   │               │
         └────────────────────┘                │
                    │                          │
                    │       ╭S64               │
                    ▼                          │
         ┌────────────────────┐                │
         │  CALCULATE H_LMTH   │               │
         └────────────────────┘                │
                    │                          │
                    │       ╭S65        ╭S62   ▼
                    ▼                   ┌──────────────────┐
 ┌──────────────────────────────────┐  │ LMTH ← LMTHREF   │
 │ LMTH                             │  └──────────────────┘
 │ ←H_LMTH＋(L_LMTH−H_LMTH)×REGRL │          │
 └──────────────────────────────────┘          │
                    │                          │
                    │◄─────────────────────────┘
                    ▼
            ┌────────────────┐
            │     RETURN      │
            └────────────────┘
```

F I G. 9

```
       ┌─────────────────────────┐
       │    CALCULATION OF       │
       │  TARGET VANE OPENING    │
       └─────────────────────────┘
                    │
                    ▼                S71
       ┌─────────────────────────┐
       │ A_CMD                   │
       │ ←A_CMD_BASE+A_FB        │
       └─────────────────────────┘
                    │
                    ▼                S72
              ╱──────────────╲      YES
             ╱ A_CMD<LMTL ?   ╲──────────────┐
             ╲                ╱               │
              ╲──────────────╱                ▼           S73
                    │ NO             ┌──────────────────┐
                    │                │ A_CMD←LMTL       │
                    │                └──────────────────┘
                    │◄──────────────────────┘
                    │
                    ▼                S74
              ╱──────────────╲      YES
             ╱ A_CMD>LMTH ?   ╲──────────────┐
             ╲                ╱               │
              ╲──────────────╱                ▼           S75
                    │ NO             ┌──────────────────┐
                    │                │ A_CMD←LMTH       │
                    │                └──────────────────┘
                    │◄──────────────────────┘
                    ▼
              ┌───────────┐
              │    END    │
              └───────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007291974 A
- WO 2007107805 A